(19) Europäisches Patentamt
European Patent Office
Office européen des brevets

(11) Veröffentlichungsnummer : **0 258 328 B1**

(12) # EUROPÄISCHE PATENTSCHRIFT

(45) Veröffentlichungstag der Patentschrift : **09.10.91 Patentblatt 91/41**

(51) Int. Cl.[5] : **H01S 3/036**

(21) Anmeldenummer : **87901333.2**

(22) Anmeldetag : **11.03.87**

(86) Internationale Anmeldenummer : **PCT/CH87/00031**

(87) Internationale Veröffentlichungsnummer : **WO 87/05750 24.09.87 Gazette 87/21**

(54) **VERFAHREN ZUR STABILISIERUNG DES BETRIEBES EINES AXIALGASLASERS UND AXIALGASLASER.**

(30) Priorität : **12.03.86 CH 1014/86**

(43) Veröffentlichungstag der Anmeldung : **09.03.88 Patentblatt 88/10**

(45) Bekanntmachung des Hinweises auf die Patenterteilung : **09.10.91 Patentblatt 91/41**

(84) Benannte Vertragsstaaten : **AT BE CH DE FR GB IT LI NL SE**

(56) Entgegenhaltungen :
**EP-A- 0 109 025**
**DE-A- 2 926 009**
**FR-A- 2 558 994**

(56) Entgegenhaltungen :
**Soviet Journal of Quantum Electronics, Band 9, Nr. 1, Januar 1979 (New York, US), V.Yu. Baranov et al.: "Gasdynamic perturbations of the gas stream in pulse-periodic Co2 lasers. II. Acoustic waves", Seiten 101-104**

(73) Patentinhaber : **PRC CORPORATION**
**North Frontage Road**
**Landing, NJ 07850 (US)**

(72) Erfinder : **Weiss, Hardy P., Dr.**
**Im Seeblick**
**CH-8825 Hütten (CH)**

(74) Vertreter : **Troesch, Jacques J., Dr. sc. nat. et al**
**Troesch Scheidegger Werner AG**
**Siewerdtstrasse 95**
**CH-8050 Zürich (CH)**

EP 0 258 328 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Stabilisierung des Betriebes eines Axialgaslasers mit
– mindestens einem Laser-Erregungsrohr
– mindestens einer Gasfördereinrichtung
– Verbindungseinrichtungen zwischen Gasfördereinrichtung und Laser-Erregungsrohr sowie einen Axialgaslaser, der nach diesem Verfahren betrieben ist.

Beim Betrieb von Axialgaslasern, wie beispielsweise für das Schweissen von Dosenlängsnähten in der Dosenindustrie, können des öftern an der Schweissnaht sich periodisch folgende Verdickungen erkannt werden. Diese sind u.a. auf Pulsationen der Laserleistung zurückzuführen. Aufgabe der vorliegenden Erfindung ist es, derartige Phänomene zu beheben. Dies wird durch ein Verfahren nach dem Wortlant von Anspruch 1 bzw. durch einen Axialgaslaser nach dem Wortlant von Anspruch 8 erreicht.

Betrachtet man einen derartigen Axialgaslaser, so ist grundsätzlich die Gasfördereinrichtung als Wechselsignalquelle zu betrachten, die ausgangsseitig und z.B. gemäss der Anzahl vorgesehener Verdichtungskammern sowie der Einrichtungsdrehzahl, einen Druck abgibt, der mit einer durch die genannten Grössen festgelegten Grundfrequenz um einen Druckmittelwert pulsiert. Je nach Ausbildung der Gasfördereinrichtung weist somit der Ausgangsdruck, bei rein sinusförmiger Pulsation, einen einzigen Frequenzanteil auf, bei von der Sinus-Form abweichender Pulsation, zusätzlich Frequenzanteile entsprechend den höheren Harmonischen.

Erregungsrohr, Verbindungseinrichtungen und allenfalls alle daran gekoppelten weiteren Einrichtungen, wie elektrische Einrichtungen für die elektrische DG- oder AC-Erregung des Erregungsrohres bilden gemeinsam eine allgemeine, die Gasfördereinrichtung als Quelle belastende, frequenz-abhängige Lastimpedanz. Bekanntlich können allgemein auch mechanische Systeme in völliger Analogie zu elektrischen Impedanzen betrachtet werden. Ebenso können mechanisch/ akustische/elektrische etc. Mischsysteme in einem System behandelt werden, wie durch Beachtung elektromechanischer Analogien. Weist nun diese von der Quelle als Last gesehene allgemeine Impedanz, als Uebertrager, mit einer frequenz-abhängigen Uebertragungsfunktion, wie durch ein Bode-Diagramm gegeben, Resonanzfrequenzen auf, die mit der Grund- oder höheren Harmonischen des Quellendruckverlaufes übereinstimmen, so liegt ein auf Resonanzfrequenz angeregter Resonanzkreis vor, womit Schwingungen der Laser-Aüsgangsleistung einsetzen können, die u.a. zu den genannten Dickenschwankungen an der Schweissnaht führen können. Beim Einsatz eines Roots-Gebläses als Gasfördereinrichtung findet man in den Dickenschwankungen an der Schweissnaht dieselbe Frequenz, wie die durch das verwendete Gebläse ausgangsseitig erzeugten Pulsschwankungen. Wird als Gasfördereinrichtung mindestens ein Kolbenverdichter eingesetzt, worunter auch Rotationsverdichter-Roots-Verdichter, Schraubenverdichter verstanden werden, so wird vorgeschlagen, dass man die durch die vorgesehene Verdichtungskammerzahl und Drehzahl des Verdichters gegebene Grundharmonische des Druckverlaufes durch Erhöhung der Kammernzahl und/oder Drehzahl wesentlich höher als mindestens Teile der Resonanzfrequenzen der Last wählt, insbesondere deren wenig gedämpfte.

Werden grundsätzlich die einzelnen Anteile der Last, elektrisches System/Gaserregungsrohr/Verbindungseinrichtung, voneinander entkoppelt, so können die Resonanzfrequenzen der Teilsysteme einzeln betrachtet werden, was wesentlich einfacher ist als die geschlossene Betrachtung des Gesamtsystems. Dies führt dazu, dass nun vorzugsweise das Laserrohr und die Verbindungseinrichtung, wie durch Gaseindüsung von der Verbindungseinrichtung ins Laserrohr, frequenzmässig entkoppelt werden.

Dadurch, dass man an der Verbindungseinrichtung weiter ein Puffervolumen für das Gas vorsieht, dessen Volumen wesentlich grösser ist als die Volumenamplituden von durch die Gasdruckeinrichtung bewirkten periodischen Fördervolumen-Pulsationen, werden Druckschwankungen mit Bezug auf ihre Wirkung auf das Laserrohr stark gedämpft: Das grosse Volumen wirkt als Tiefpassglied. Wird ein derartiges Puffervolumen vorgesehen, so muss sichergestellt werden, dass bei zwei und mehr Gaszuleitungen an das Laserrohr bzw. an die Laserrohranordnung die Gaszufuhr an allen Zuführleitungen gleich ist. Hierzu wird das Puffervolumen in einer achsparallel zum Laserrohr angeordneten Kammer vorgesehen, von der n Leitungen mit $n \geq 2$ radial zum Laser-Erregungsrohr führen und dabei, wie in Anspruch 6 spezifiziert, dimensioniert. Vorzugsweise erhölt man dabei den Widerstandsbeiwert in den Leitungen, wie durch Vorsehen von Gittern, Wabenmustern etc.

Ein Axialgaslaser mit einem Rootsverdichter und Gasverteilungsrohren ist in FR-A- 2558994 beschrieben.

EP-A- 0109025 betrifft einen Axialgaslaser mit einem Turboverdichter, der Gas über ein gemeinsames Gefäß zu mehreren Gasentladungsrohren fördert.

Die Erfindung wird anschliessend anhand von Figuren erläutert.

Es zeigen:

Fig. 1 schematisch eine Axialgaslaseranordnung, erfindungsgemäss ausgelegt,

Fig. 2 ein qualitatives Ersatzbild der Anordnung gemäss Fig. 1 zur Erläuterung ihres Frequenzverhaltens,

Fig. 3 qualitativ den Frequenz-Amplitudengang einer Kammer gemäss Fig. 1.

Der Axialgaslaser umfasst eine Erregungsrohranordnung 1 mit (nicht dargestellt) Elektroden zu ihrer elektrischen AG- oder DC-Anregung. Strichpunktiert ist die Laserachse A eingetragen. Zur Erregungsrohranordnung 1 führt, pro Erregungsrohrstrecke 1a - 1d eine Gaszuleitung 3 und für zwei Erregungsrohrstrecken sind je eine Gaswegführung 4 vorgesehen. Die Zuleitungen 3 führen aus einer, vorzugsweise wenigstens nahezu achsparallel zur Laserachse A angelegten längsausgedehnten Pufferkammer 5. Der Uebertritt des Gases von den Leitungen 3 in die Erregungsstrecke 1 erfolgt über schematisch eingetragene Oeffnungen 7 reduzierten Querschnittes, Blenden bzw. Düsen und/oder weitere Strömungswiderstände wie Gitter 7a. Die Pufferkammer 5 wird durch eine Gasfördereinrichtung 9 druckbeaufschlagt, beispielsweise durch einen Root-Verdichter.

Weist die verwendete Fördereinrichtung eine Anzahl m von Verdichtungskammern auf und wird mit der Drehzahl r betrieben, so ergibt sich, wie schematisch in der Figur in einem Druck/Zeitdiagramm $p_9$=F(t) ausgangsseitig der Gasfördereinrichtung 9 eingetragen, eine Pulsation des Ausgangsdruckes $p_9$ mit einer Grundfrequenz gemäss

$$f_{9o} = \frac{1}{2\pi \cdot m \cdot r}$$

In Fig. 2 ist ein Ersatzbild der Anordnung gemäss Fig. 1 dargestellt. Die Gasfördereinrichtung 9 gemäss Fig. 1 gibt ausgangsseitig im allgemeinen einen pulsierenden Druck $p_9(t)$ ab, wobei der resultierende Druckverlauf, wie in Fig. 2 schematisch dargestellt, eine Grundharmonische entsprechend $f_{9o}$ und höhere Harmonische $f_{9x}$ aufweist. Das die Gasfördereinrichtung 9 belastende System - die Verbindungseinrichtungen mit der Kammer 5, den Leitungen 3 und die Erregungsstrecke 1, mit allen daran vorgesehenen mechanischen, elektrischen, optischen etc. Vorkehrungen, aus Druckübertragungseinheiten zusammengesetzt und schematisch in Fig. 2 mit $E_{5,3}$, $E_1$, etc. bezeichnet - überträgt die eingangsseitigen Druckänderungen mit einer frequenzabhängigen Uebertragungsfunktion entsprechend F(s), in Fig. 2 als Amplitudengänge des Bode-Diagramms dargestellt, an den Ausgang. Bekanntlich sind derartige Uebertragungsfunktionen F(s) mit s als Laplace-Operator, definiert als Verhältnis von laplacierter Ausgangs- zu laplacierter Eingangsgrösse, also z.B.

$$\left|\frac{\tilde{p}_a}{\tilde{p}_e}\right|_{5,3} = F_{5,3}(s)$$

In Fig. 2 sind rein qualitativ mögliche Amplitudengänge der Uebertragungsfunktionen, üblicherweise in dB angegeben, aufgezeichnet. Die Frequenzgänge der einzelnen Strecken E weisen dabei streckenspezifische Resonanzfrequenzen $f_r$ auf. Werden zwei oder mehrere derartige Einheiten E, wie dies für den Aufbau einer Anlage gemäss Fig. 1 notwendig ist, zusammengebaut, so entsteht ein kombinierter Uebertragungsblock $E_K$. Bei nicht gewährleisteter Rückwirkungsfreiheit der Blöcke hat der kombinierte Block $E_K$ zusätzliche und nicht mit den Resonanzfrequenzen der Einzelblöcke übereinstimmende Resonanzfrequenzen $f_{rK}$. Liegt nun eine der Resonanzfrequenzen $f_{rK}$ der kombinierten Einheit $E_K$, die auch Resonanzfrequenzen mindestens nahe der $f_r$ der Einzelblöcke umfassen, auf einer der harmonischen Frequenzen $f_{9x}$ der Gasfördereinrichtung 9 der Quelle, so wirkt die Einheit $E_K$ als auf Resonanz angeregter Schwingkreis: Die resultierenden ausgangsseitigen Druckschwankungen dieser Frequenz werden, je nach Kreisgüte, gross. Diese Druckschwankungen ausgangsseitig, in der Entladungsstrecke 1, führen zu Pulsationen der Laserausgangsleistung, z.B. mit den oben erwähnten Auswirkungen.

Die Lösung dieses Problems liegt in folgenden Massnahmen, einzeln getroffen oder in Kombination:

– Wahl von Anregungsfrequenzen, abweichend von Last-Resonanzfrequenzen oder umgekehrt.
– Isolation einzelner Einheiten gegeneinander: Erstellen von Rückwirkungsfreiheit.
– Auslegung der Uebertragungsblöcke mit erwünschten Frequenzgängen, z.B. als Tiefpassglieder, zur gezielten Beeinflussung des kombinierten Frequenzganges durch Dämpfung bei gefährlichen Resonanzstellen $f_r$, $f_{rK}$.

Eine erste Massnahme zur Behebung des genannten Problems ist, die Frequenzanteile $f_{9x}$, die durch die Gasfördereinrichtung 9 erzeugt werden, derart zu verschieben, dass sie möglichst weit von Resonanzfrequenzen $f_{rK}$, $f_r$ der kombinierten Einheit $E_K$ liegen. Nach dem oben angegebenen Ausdruck für die Grundharmonische $f_{9o}$ der resultierenden Ausgangsdruckpulsationen der Gasfördereinrichtung 9, wird dies durch Erhöhung der Anzahl vorgesehener Verdichtungskammern m und/oder durch Erhöhung der Drehzahl r eines vorgesehenen Verdichters erreicht. Insbesondere bei Einsatz eines Turboverdichters (siehe W. Opitz, Turboverdichter, in "Taschenbuch für den Maschinenbau", 14. Auflage, Springer Verlag Berlin) werden praktisch keine Druckpulsationen am Ausgang des Verdichters erzeugt, womit sich der Einsatz derartiger Turboverdichter ausgezeichnet für den vorliegenden Zweck eignet. Bei derartigen Verdichtern können sowohl m wie auch r sehr hoch gewählt werden. Insbesondere lassen sich derartige Verdichter auch leicht steuern, so dass experimentell bei aufgeschalteter Last die optimale Drehzahl r gesucht werden kann, ohne dabei Leistungseinbussen in Kauf nehmen zu müssen.

Wird nun, gemäss Fig. 1, als zweite Massnahme, als alleinige oder zu der bisher beschriebenen und allenfalls den noch zu beschreibenden hinzukommende, der Gasfördereinrichtung 9 eine Pufferkammer 5 nachgeschaltet, deren Volumen $V_5$ wesentlich grösser ist als die Fördervolumen-Amplituden-Werte $\Delta V$ bei der Grundharmonischen der Druckpulsationen, so wirkt diese Kammer 5 wegen ihres grossen Volumens, wie in Fig. 3 dargestellt, als Tiefpassglied mit einer Grenzfrequenz mit Resonanzüberhöhung, die wesentlich tiefer ist als übliche Anregungsfrequenzen. Damit ergibt sich eine starke Dämpfung bei den Frequenzen $f_r$, $f_{rK}$ der Last, so dass die Last des Gebläses $E_5$, $E_{5,3}$, $E_1$, bei den Anregungsfrequenzen, insbesondere der grundharmonischen Pulsationsfrequenz $f_{9o}$ des Gebläses stark gedämpft ist. Diese Massnahme, d.h. das Vorsehen einer Pufferkammer 5 ergibt für sich allein oder zusätzlich zur vorbeschriebenen Massnahme an der Gasförderungseinrichtung bzw. noch zu beschreibenden Massnahmen eine wesentliche Reduzierung der Laser-Leistungsschwingung.

Wird eine Pufferkammer 5, wie in Fig. 1 dargestellt, vorgesehen, welche mehrere Leitungen 3 zur Erregungsrohranordnung 1 speist, so muss im weiteren dafür gesorgt werden, dass alle vorgesehenen Leitungen 3, deren Anzahl mit n bezeichnet sei, n≥2 gleichmässig gasdurchflossen werden. Dies wird dann erreicht, wenn mindestens genähert gilt:

$$A_{zu} \geqslant \sum_{1}^{n} A_{Ln} \frac{4}{\sqrt{1 + \zeta_{Ln}}} \qquad (1)$$

wobei bezeichnen:

$A_{zu}$ : die Querschnittsfläche der Kammer 5, senkrecht zu ihrer Ausdehnungsachse B,
$n \geq 2$ : die Nummer und Anzahl der betrachteten Leitungen 3
$\zeta_{Ln}$ : den Widerstandsbeiwert der betrachteten Leitungen 3.

Vorzugsweise wird der Widerstandsbeiwert $\zeta_{Ln}$ der Leitungen 3, wie in Fig. 1 bei 7a angedeutet, durch mindestens ein Strömungswiderstandselement, wie ein Gitter, ein Wabenmuster etc. erhöht.

Wird diese Bedingung eingehalten, so ist eine gleichmässige Gaseinströmung in die Erregungsrohranordnung 1 über alle n vorgesehenen Leitungen 3 gewährleistet.

Auch dadurch wird im Erregungsrohr 1, z.B. via Turbulenzverhinderung, die Laser-Leistung im obigen Sinn stabilisiert.

Eine weitere eigenständige oder mit andern kombinierbare Massnahme, die das Entstehen von Schwingungen der Laser-Leistung behebt, ist das Einführen eines Isoliergliedes zwischen Verbindungseinrichtungen 3, 5 und Erregungsstrecke 1. Gemäss Fig. 1 wird dies durch die Düsen 7 erreicht. Insbesondere, wenn überkritisch betrieben, d.h. mit einem Verhältnis des Druckes kammerseitig zum Druck erregungsstreckenseitig von >1,8, wirkt die Düse 7 als Tiefpassglied mit einer extrem tiefen Grenzfrequenz. Sehr langsame Druckänderungen eingangsseitig wirken sich wohl ausgangsseitig aus, während schnellere Druckänderungen ausgangsseitig nicht erscheinen. Dies gilt in beiden Uebertragungsrichtungen betrachtet, wie übrigens auch bei Kammer 5, womit eine Frequenz-Entkopplung bzw. Isolation realisiert ist.

Durch Berücksichtigung einzelner oder mehrerer der obgenannten Massnahmen gelingt es, Schwingungserscheinungen der Laser-Ausgangsleistung zu beheben. Die Frequenzgänge der einzelnen Teilsysteme und kombinierten Systeme können mindestens genähert berechnet werden. Einfach ist es, die Frequenzgänge der Last auszumessen, indem z.B. eingangsseitig sinusförmige Druckschwankungen konstanter Amplitude und variabler Frequenz angelegt werden und die übertragenen ausgangsseitigen Druckschwankungen ermittelt werden. Die Identifikation des Uebertragungsverhaltens von Uebertragungsblöcken mittels ausgewählter Eingangsgrössen-Verläufen, wie Schritt, Impuls, Sinus etc. ist auch bekannt.

Es wird nun anschliessend noch je ein Beispiel zur a) Verwendung von Bedingung (1) und b) zur Berechnung der Last-Resonanzfrequenzen $f_r$ gegeben.

a)

– Es sei gegeben ein Erregungsrohr 1, gemäss Fig. 1, mit n = 8 Zuleitungen 3 und einer Länge von 2000 mm.

– In jeder Zuleitung entsprechend 7a von Fig. 1 sei ein Lochblech mit einem Widerstandsbeiwert $\zeta_{Ln} \simeq 7$

eingesetzt, wie dies einem Lochblech mit 40% Oeffnung entspricht.

– Die Kammer 5, gemäss Fig. 1, weise einen rechteckigen Querschnitt entsprechend der Fläche $A_{zu}$ auf, mit Kantenlängen 60 mm, 140 mm.

– Der Durchmesser der Leitungen 3 sei 30 mm.

Für die Fläche $A_{zu}$ ergibt sich

$$A_{zu} = 60 \cdot 140 = 8400\ mm^2. \quad (2)$$

Für die Leitungsquerschnittsfläche $A_{Ln}$ ergibt sich

$$A_{Ln} = \frac{\pi \cdot 900}{4} = 706{,}9\ mm^2. \quad (3)$$

Aus (1) ergibt sich mithin

$$8400 \geq 8 \cdot \frac{706{,}9 \cdot 4}{\sqrt{8}} = 7997\ mm^2. \quad (4)$$

Somit ist die Bedingung (1) erfüllt, und es ergibt sich eine gleichmässige Gaszuführung durch die 8 vorgesehenen Leitungen 3 in das Erregungsrohr 1.

b) Es sei gegeben ein Erregungsrohr der Länge 2000 mm.

Das Erregungsrohr sei aufgrund vorgesehener, bekannter Spiegel beidseits des Rohres als zweiseitig geschlossenes Rohr zu betrachten. Die Resonanzfrequenzen dieses Rohres lassen sich bekanntlich nach

$$f_r = (k + 1) \frac{C_L}{2\ell} \quad (5)$$

berechnen. Es ergibt sich für die Grundharmonische (k = 0), mit der Schallgeschwindigkeit $c_L$ im eingesetzten Gas von 600 m/s eingesetzt.

$$f_{ro} = \frac{600 \cdot 10^3}{4 \cdot 2 \cdot 10^3} = 150\ sec^{-1} = 150\ Hz. \quad (6)$$

Wird somit ein Gebläse eingesetzt, das ausgangsseitig Druckpulsationen mit der Grundharmonischen von 150 Hz abgibt, so wird das einen Resonator mit Resonanzfrequenz auf 150 Hz bildende Erregungsrohr auf seiner Resonanzfrequenz angeregt, und es werden die entsprechenden Laser-Leistungspulsationen beobachtet: Das verwendete Gebläse muss durch Wahl der Drehzahl und/oder der Kammernzahl so gewählt werden, dass allenfalls auftretende Druckpulsation eine Grundharmonische aufweist, die vorzugsweise wesentlich höher als die genannten 150 Hz liegt.

## Patentansprüche

1. Verfahren zur Stabilisierung des Betriebes eines Axial-Gaslasers mit
– mindestens einem Laser-Erregungsrohr
– mindestens einer Gasfördereinrichtung
– Verbindungseinrichtungen zwischen Gasfördereinrichtung und Laser-Erregungsrohr,
dadurch gekennzeichnet, dass man durch Druckpulsationen ($P_9$) der Gasfördereinrichtung (9) bewirkte Druckverlauf-Frequenzanteile ($f_{9x}$) neben Resonanz-Frequenzen ($f_r$) der mindestens durch Erregungsrohr (1) und Verbindungseinrichtung (3, 5) gebildeten Last der Fördereinrichtung wählt.

2. Verfahren nach Anspruch 1, wobei die Gasfördereinrichtung (9) mindestens einen Kolbenverdichter, darunter fallend auch Rotationsverdichter, Roots-Verdichter, Schraubenverdichter, umfasst, dadurch gekennzeichnet, dass man die durch die Anzahl vorgesehener Verdichtungskammern (m) am Verdichter (9) und Drehzahl (r) des Verdichters (9) gegebenen Grundharmonische ($f_{9o}$) des Druckverlaufs ($P_9$) durch Erhöhung der Kammerzahl (m) und/oder Drehzahl (r) wesentlich höher als mindestens Teile der Resonanzfrequenzen ($f_r$) der Last wählt.

3. Verfahren nach Anspruch 1, dadurch gekennzeichnet, dass man zur Minimalisierung der Druckverlauf-Frequenzanteil-Amplituden einen Turboverdichter, wie einen Radialventilator, einen Axialventilator, ein ein- oder mehrstufiges Radialgebläse, einen ein- oder mehrgehäusigen Radialkompressor, ein Axialgebläse oder einen Axialkompressor, einsetzt.

4. Verfahren nach einem der Ansprüche 1 bis 3, dadurch gekennzeichnet, dass man das Laser-Erregungsrohr (1) und die Verbindungseinrichtung (3, 5) frequenzmässig, wie durch Gaseindüsung von der Verbindungseinrichtung (3, 5) in das Laser-Erregungsrohr, entkoppelt.

5. Verfahren nach einem der Ansprüche 1 bis 4, dadurch gekennzeichnet, dass man an der Verbindungseinrichtung (3, 5) ein Puffervolumen ($V_5$) für das Gas vorsieht, das wesentlich grösser ist als durch die Gasfördereinrichtung bewirkte Amplituden von Fördervolumen-Pulsationen.

6. Verfahren nach Anspruch 5, dadurch gekennzeichnet, dass das Puffervolumen ($V_5$) in einer achsparallel (B) zum Laserrohr (1) angeordneten Kammer (5) vorgesehen ist, von der n Leitungen (3) mit n≥ 2, radial zum

Laser-Erregungsrohr (1) führen, wobei die Querschnittsfläche der Kammer $A_{zu}$ und die Leitungs-Querschnittsflächen ($A_{Ln}$) sowie die Widerstandsbeiwerte ($\zeta_{Ln}$) der Leitungen (3) sich nach

$$A_{zu} \geqslant \sum_{1}^{n} A_{Ln} \frac{4}{\sqrt{1 + \zeta_{Ln}}}$$

verhalten.

7. Verfahren nach Anspruch 6, dadurch gekennzeichnet, dass man den Widerstandsbeiwert ($\zeta_{Ln}$) mittels mindestens eines Strömungswiderstandes, wie eines Gitters (7a), in den Leitungen (3) erhöht.

8. Axialgaslaser, der nach dem Verfahren gemäß Anspruch 1 betrieben ist, mit

– mindestens einem Laser-Erregungsrohr (1)
– mindestens einer Gasfördereinrichtung (9)
– Verbindungseinrichtungen zwischen Gasfördereinrichtung und Laser-Erregungsrohr (3, 5),

wobei die Gasfördereinrichtung (9) mindestens einen Turboverdichter umfasst und die Verbindungseinrichtungen mindestens eine Pufferkammer (5) zwischen Fördereinrichtung (9) und Erregungsrohr (1), deren Volumen (V) wesentlich grösser ist als die Amplituden durch den Turboverdichter (9) noch bewirkter Fördervolumen-Pulsationen.

9. Axialgaslaser nach Anspruch 8, dadurch gekennzeichnet, dass die Pufferkammer (5) wenigstens nahezu achsparallel (B) zum Erregungsrohr (1) ausgelegt ist und n Verbindungsleitungen (3) radial zum Rohr (1) aufweist, mit n≥ 2, und sich die Kammerquerschnittsfläche ($A_{zu}$) und die Leitungsquerschnittsfläche ($A_{Ln}$) der Leitungen (3) sowie die Widerstandsbeiwerte ($\zeta_{Ln}$) der Leitungen (3) mindestens genähert nach

$$A_{zu} \geqslant \sum_{1}^{n} A_{Ln} \cdot \frac{4}{\sqrt{1 + \zeta_{Ln}}}$$

verhalten.

10. Axialgaslaser nach Anspruch 9, dadurch gekennzeichnet, dass in den Verbindungsleitungen ein Strömungswiderstand (7a), wie ein Gitter, vorgesehen ist.

11. Axialgaslaser nach einem der Ansprüche 8 bis 10, dadurch gekennzeichnet, dass die Verbindung der Verbindungseinrichtungen zum Laser-Erregungsrohr über mindestens eine Düse (7) erfolgt.

## Claims

1. A method of stabilizing the operation of an axial gas laser with

– at least one laser excitation tube,
– at least one gas propelling device,
– connection devices between the gas propelling device and the laser excitation tube,

characterized by the fact that pressure course frequency components ($f_{9x}$) resulting from pressure pulsations ($P_9$) of the gas propelling device (9) are selected to be shifted with respect to resonnance frequencies ($f_r$) of the load of the propelling device, said load being formed at least by the excitation tube (1) and the connection device (3, 5).

2. A method according to claim 1, whereby the gas propelling device (9) comprises at least one piston compressor, which category also includes rotary compressors, Roots compressors and screw-type compressors, characterized by the fact that the basic harmonic ($f_{90}$) of the pressure course ($P_9$) resulting from the number of compression chambers (m) provided on the compressor (9) and by the rotational speed (r) of the compressor (9) is selected considerably higher than at least parts of the resonance frequencies ($f_r$) of the load by increasing the number of chambers (m) and/or the rotational speed (r).

3. A method according to claim 1, characterized by the fact that in order to minimize the pressure course frequency component amplitudes, a turbocompressor, such as a radial fan, an axial fan, a single- or multi-stage radial blower, a single- or multi-case radial compressor, an axial blower or an axial compressor, is used.

4. A method according to one of the claims 1 to 3, characterized by the fact that the laser excitation tube (1) and the connection device (3, 5) are frequency-decoupled, for example by feeding the gas through a nozzle

from the connection device (3, 5) into the laser excitation tube.

5. A method in accordance with one of the claims 1 to 4, characterized by the fact that on the connection device (3, 5), a buffer volume ($V_5$) is provided for the gas which is considerably larger than amplitudes of delivery volume pulsations caused by the gas propelling device.

6. A method in accordance with claim 5, characterized by the fact that the buffer volume ($V_5$) is provided in a chamber (5) arranged with a parallel axis (B) to the laser tube (1), from which n pipes (3) with n≥ 2 are radially led to the laser excitation tube (1), whereby the cross-sectional area of the chamber $A_{zu}$ and the pipe cross-sectional areas ($A_{Ln}$) and the resistance coefficients ($\zeta_{Ln}$) of the pipes (3) are as follows

$$A_{zu} \geqslant \sum_{1}^{n} A_{Ln} \frac{4}{\sqrt{1 + \zeta_{Ln}}}$$

7. A method in accordance with claim 6, characterized by the fact that the resistance coefficient ($\zeta_{Ln}$) is increase by means to at least one flow resistance, such as a grid (7a), in the pipes (3).

8. An axial gas laser operated according to the method of claim 1, with

– at least one laser excitation tube (1),

– at least one gas propelling device (9),

– connection devices between the gas propelling device and the laser excitation tube (3, 5),

in which the gas propelling device (9) comprises at least one turbocompressor and the connection devices comprise at least one buffer chamber (5) between the propelling device (9) and the excitation tube (1), the volume (V) of which being considerably greater than the amplitudes of delivery volume pulsations still caused by the turbocompressor (9).

9. An axial gas laser according to claim 8, characterized by the fact that the buffer chamber (5) is arranged at least approximately parallel to the axis (B) of the excitation tube (1) and has n connection pipes (3) radially to the tube (1), with n≥ 2, and in which the cross-sectional area ($A_{zu}$) of the chamber and the cross-sectional area ($A_{Ln}$) of the pipes (3) and the resistance coefficients ($\zeta_{Ln}$) of the pipes (3) are at least approximately as follows

$$A_{zu} \geqslant \sum_{1}^{n} A_{Ln} \cdot \frac{4}{\sqrt{1 + \zeta_{Ln}}}.$$

10. An axial gas laser according to claim 9, characterized by the fact that a flow resistance (7a), such as a grid, is provided in the connection pipes.

11. An axial gas laser according to the claims 8 to 10, characterized by the fact that connection of the connection devices to the laser excitation tube is installed via at least one nozzle (7).

## Revendications

1. Procédé de stabilisation du fonctionnement d'un laser axial à gaz comprenant

– au moins un tube à excitation de laser,

– au moins un dispositif de débit de gaz,

– des dispositifs de liaison entre le dispositif de débit de gaz et le tube à excitation de laser,

caractérisé en ce que l'on choisit les composantes de fréquence ($f_{9x}$) des variations de pression provoquées par les pulsations de pression ($P_9$) du dispositif de débit de gaz (9) de manière à ce qu'elles ne coincident pas avec les fréquences de résonance ($f_r$) de la charge du dispositif de débit constituée au moins du tube à excitation (1) et des dispositifs de liaison (3, 5).

2. Procédé selon la revendication 1, où le dispositif de débit de gaz (9) comprend au moins un compresseur à pistons, cela recouvrant également les compresseurs tournants, les compresseurs Roots, les compresseurs à vis, caractérisé en ce que l'on choisit une fréquence fondamentale ($f_{90}$) des variations de pression ($P_9$), déterminée par le nombre des chambres de compression (m) du compresseur (9) et la vitesse de rotation (r) du

compresseur (9), telle qu'elle soit nettement supérieure à au moins certaines composantes des fréquences de résonance ($f_r$) de la charge en augmentant le nombre (m) des chambres et/ou la vitesse de rotation (r).

3. Procédé selon la revendication 1, caractérisé en ce que, pour minimiser l'amplitude des fréquences de variation de la pression, on utilise un turbocompresseur, par exemple un ventilateur radial, un ventilateur axial, une soufflante radiale à un ou plusieurs étages, un compresseur radial à un ou plusieurs corps, une soufflante axiale ou un compresseur axial.

4. Procédé selon l'une des revendications 1 à 3, caractérisé en ce que l'on découple en fréquence le tube à excitation (1) et les dispositifs de liaison (3, 5), par exemple par une injection du gaz entre les dispositifs de liaison (3, 5) et le tube à excitation.

5. Procédé selon l'une des revendications 1 à 4, caractérisé en ce que l'on prévoit que le dispositif de liaison (3, 5) possède un volume tampon ($V_5$) de gaz nettement plus grand que les amplitudes des pulsations du volume débité par le dispositif de débit du gaz.

6. Procédé selon la revendication 5, caractérisé en ce que le volume tampon ($V_5$) se présente sous la forme d'une chambre (5) disposée selon un axe (B) parallèle au tube à excitation (1), de laquelle partent radialement vers le tube à excitation (1) n conduites (3), n étant égal ou supérieur à 2, l'aire de la section de la chambre $A_{zu}$ entretenant avec les aires des sections es conduites ($A_{Ln}$) et avec leurs coefficients de résistance ($\zeta_{Ln}$) des conduites (3) la relation suivante:

$$A_{zu} \geqslant \sum_{1}^{n} A_{Ln} \sqrt{\frac{4}{1+\zeta_{Ln}}}.$$

7. Procédé selon la revendication 6, caractérisé en ce que le coefficient de résistance ($\zeta_{Ln}$) est augmenté dans les conduites (3) en y plaçant au moins une résistance à l'écoulement, par exemple une grille (7a).

8. Laser axial à gaz exploité selon le procédé de la revendication 1, comprenant

– au moins un tube à excitation de laser,
– au moins un dispositif de débit de gaz,
– des dispositifs de liaison entre le dispositif de débit de gaz et le tube à excitation de laser,

où le dispositif de débit de gaz (9) comprend au moins un turbocompresseur et où les dispositifs de liaison comprennent au moins une chambre tampon (5) entre le dispositif de débit de gaz (9) et le tube à excitation (1) dont le volume (V) est nettement supérieur à l'amplitude des pulsations de volume débité qui sont encore produites par le turbocompresseur (9).

9. Laser axial à gaz selon la revendication 8, caractérisé en ce que la chambre tampon (5) est disposée selon un axe (B) au moins pratiquement parallèle à celle du tube à excitation (1) et possède n conduites de liaison (3) menant radialement au tube à excitation (1), n étant égal ou supérieur à 2, et en ce que l'aire de la section de la chambre $A_{zu}$ entretient avec les aires des sections des conduites ($A_{Ln}$) et avec les coefficients de résistance ($\zeta_{Ln}$) des conduites (3) la relation suivante, au moins par approximation:

$$A_{zu} \geqslant \sum_{1}^{n} A_{Ln} \cdot \sqrt{\frac{4}{1+\zeta_{Ln}}}.$$

10. Laser axial à gaz selon la revendication 9, caractérisé en ce qu'il est prévu dans les conduites de liaison une résistance à l'écoulement (7a), par exemple une grille.

11. Laser axial à gaz selon l'une des revendications 8 à 10, caractérisé en ce que la liaison entre les dispositifs de liaison et le tube à excitation est assurée par au moins une buse (7).

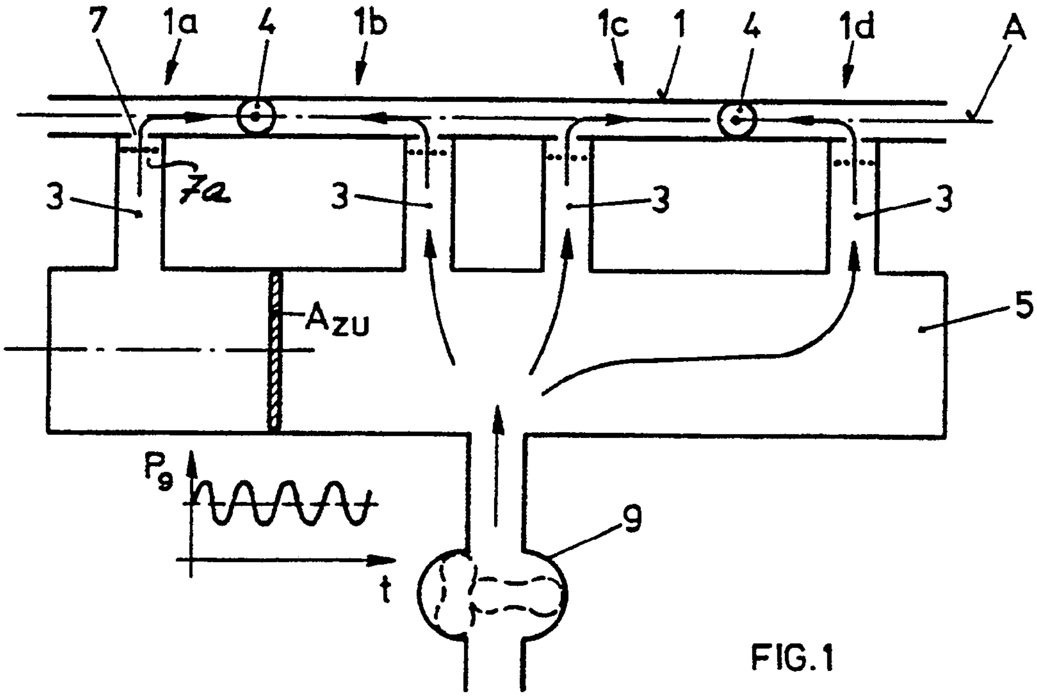
7
1a
4
1b
1c
1
4
1d
A
7a
3
3
3
3
5
$A_{ZU}$
$P_9$
t
9

FIG.1

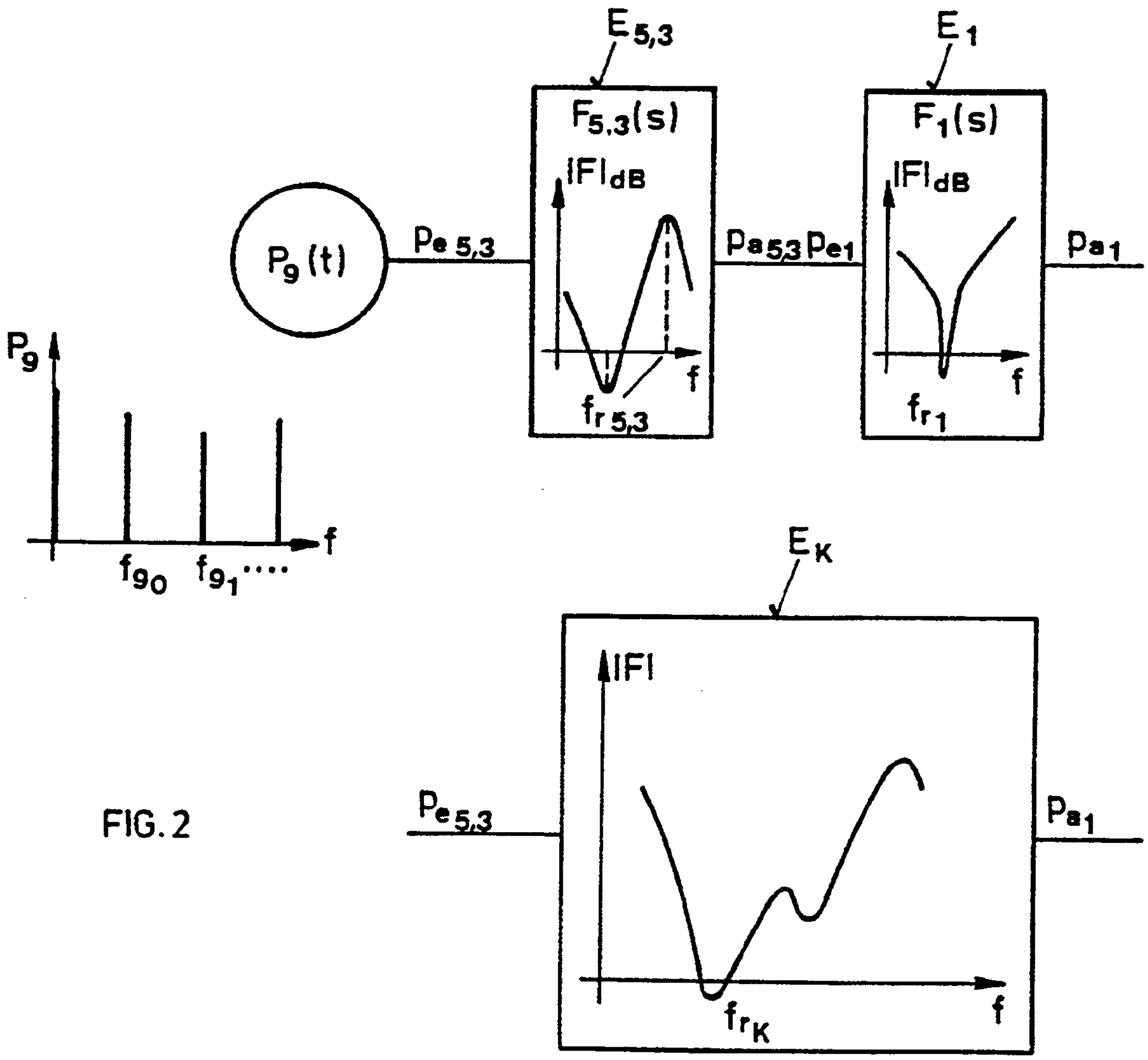
$E_{5,3}$
$E_1$
$F_{5,3}(s)$
$F_1(s)$
$|F|_{dB}$
$|F|_{dB}$
$P_9(t)$
$p_{e\,5,3}$
$p_{a\,5,3}\,p_{e1}$
$p_{a_1}$
f
$f_{r\,5,3}$
f
$f_{r_1}$
$P_9$
f
$f_{9_0}$ $f_{9_1}$....
$E_K$
$|F|$
$p_{e\,5,3}$
$p_{a_1}$
f
$f_{r_K}$

FIG. 2

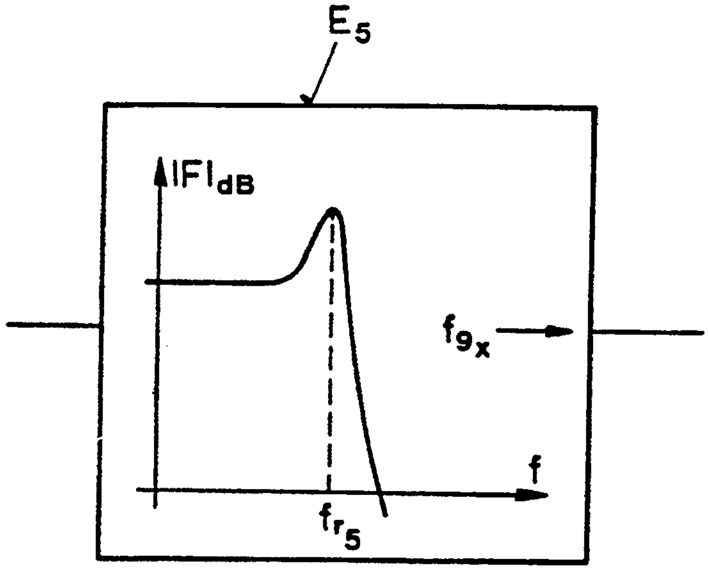


FIG. 3